(19) Europäisches Patentamt / European Patent Office / Office européen des brevets

(11) **EP 2 125 493 B1**

(12) **EUROPÄISCHE PATENTSCHRIFT**

(45) Veröffentlichungstag und Bekanntmachung des Hinweises auf die Patenterteilung:
**07.04.2010 Patentblatt 2010/14**

(21) Anmeldenummer: **07821886.4**

(22) Anmeldetag: **26.10.2007**

(51) Int Cl.:
**B62D 15/02** *(2006.01)*

(86) Internationale Anmeldenummer:
**PCT/EP2007/061524**

(87) Internationale Veröffentlichungsnummer:
**WO 2008/077668 (03.07.2008 Gazette 2008/27)**

(54) **VERFAHREN ZUR EINSTELLUNG EINES LENKSYSTEMS IN EINEM FAHRZEUG**

METHOD FOR ADJUSTING A STEERING SYSTEM IN A VEHICLE

PROCÉDÉ DE RÉGLAGE D'UN SYSTÈME DE DIRECTION DANS UN VÉHICULE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.12.2006 DE 102006060628**

(43) Veröffentlichungstag der Anmeldung:
**02.12.2009 Patentblatt 2009/49**

(73) Patentinhaber: **Robert Bosch GmbH**
**70442 Stuttgart (DE)**

(72) Erfinder:
• **BUERKLE, Lutz**
**71229 Leonberg (DE)**
• **WEILKES, Michael**
**31199 Diekholzen (DE)**
• **RENTSCHLER, Tobias**
**75180 Pforzheim (DE)**

(56) Entgegenhaltungen:
WO-A-2005/047045    DE-A1- 10 137 292
DE-A1-102004 037 298

**Beschreibung**

Die Erfindung bezieht sich auf ein Verfahren zur Einstellung eins Lenksystems in einem Fahrzeug nach dem Oberbegriff des Anspruches 1.

Stand der Technik

In der DE 101 37 292 A1 wird ein Fahrerassistenzsystem beschrieben, bei dem Umgebungsdaten sowie die Fahrzeugbewegung erfasst bzw. abgeschätzt und miteinander in Bezug gesetzt werden, woraufhin im Lenksystem ein Lenkunterstützungsmoment erzeugt bzw. angepasst wird. Konkret wird dies in der Weise realisiert, dass der Fahrbahnverlauf erfasst und eine entsprechende Solltrajektorie für die Fahrzeugbewegung ermittelt wird, die mit der tatsächlichen Bahn des Fahrzeuges verglichen wird, woraufhin zur Lenkkorrektur ein unterstützendes Lenkmoment erzeugt wird. Auf diese Weise kann das Fahrzeug auch ohne Eingriff des Fahrers der Fahrspur folgen.

Aus der DE 10 2004 037 298 A1 ist ein Verfahren zur Spurbreitenadaption in einem Spurhaltesystem bekannt. Um das Fahrzeug in der Fahrspur zu halten, wird zunächst über ein im Fahrzeug mitgeführtes Videosystem der Verlauf der Fahrspur und die Fahrspurbreite ermittelt, wobei diese Werte der Berechnung einer Solltrajektorie zugrunde gelegt werden, die die Ideallinie darstellt. Gegenüber der Solltrajektorie wird eine Abweichung der Fahrzeugtrajektorie zugelassen, bei deren Überschreitung ein fahrerunabhängiges Lenkraddrehmoment auf das Lenkrad ausgeübt wird. Liegt die Abweichung der Fahrzeugtrajektorie von der Solltrajektorie betragsmäßig unterhalb eines Schwellenwerts, erfolgt kein Eingriff; die Lenkung des Fahrzeuges bleibt dem Fahrer überlassen.

Weiterhin ist aus der WO2005/047045 A1 ein Verfahren zur Einstellung eines Lenksystems in einem Fahrzeug bekannt, bei dem eine an die Umgebungssituation angepasste Solltrajektorie erzeugt und ein Lenkmoment so eingestellt wird, dass das Fahrzeug der Solltrajektorie folgt.

Offenbarung der Erfindung

Von diesem Stand der Technik ausgehend liegt der Erfindung die Aufgabe zugrunde, den Fahrer eines Fahrzeugs beim Lenken zu unterstützen. Dabei soll einerseits ein weitgehend autonomes Lenken möglich sein, andererseits sollen Aufmerksamkeitsdefizite beim Fahrer vermieden werden.

Diese Aufgabe wird erfindungsgemäß mit den Merkmalen des Anspruches 1 gelöst. Die Unteransprüche geben zweckmäßige Weiterbildungen an.

Bei dem erfindungsgemäßen Verfahren zur Einstellung eines Lenksystems in einem Fahrzeug wird eine an die Umgebungssituation angepasste Solltrajektorie erzeugt, woraufhin im Lenksystem ein Lenkmoment in der Weise eingestellt wird, dass das Fahrzeug der Solltrajektorie folgt. Sobald die Fahrspur detektiert ist, kann daraus die Straßenkrümmung ermittelt werden. Auf der Grundlage der Straßenkrümmung wird die Solltrajektorie ermittelt und das Lenkgrundmoment in einem mathematischen Fahrzeugmodell berechnet, welches das Fahrzeug auf der Solltrajektorie hält, was insbesondere im Lenksystem in einem Regel- und Steuergerät durchgeführt wird. Erfindungsgemäß ist vorgesehen, dass der Solltrajektorie ein Toleranzkorridor zugeordnet wird. Für den Fall, dass das Fahrzeug den Toleranzkorridor verlässt, wird dem Lenkgrundmoment ein Lenkführungsmoment überlagert, das das Fahrzeug wieder in Richtung des Toleranzkorridors zurückführt.

Die Vorgabe der Solltrajektorie und die Erzeugung des Lenkgrundmomentes im Lenksystem bewirkt, dass das Lenksystem in der Weise eingestellt wird, dass das Fahrzeug der Solltrajektorie folgt. Hierdurch wird ein weitgehend autonomes Führen des Fahrzeuges auf der Grundlage ermittelter Umgebungsdaten ermöglicht. Zugleich wird der Toleranzkorridor vorgegeben, innerhalb dem der Fahrer kleine Lenkbewegungen ausführen kann, wodurch beispielsweise Umgebungseinflüsse wie Windversatz oder dergleichen kompensiert werden können. Da der Fahrer eine Lenkfunktion ausüben kann, sinkt die Aufmerksamkeit des Fahrers nicht ab. Verlässt das Fahrzeug den Toleranzkorridor, so wird dem Lenkgrundmoment das Lenkführungsmoment überlagert, wodurch das Fahrzeug wieder in Richtung des Toleranzkorridors gelenkt wird. Dieses Lenkführungsmoment spürt der Fahrer als ein erhöhtes Widerstandsmoment in der Lenkhandhabe gegen zusätzliche Auslenkungen, die das Fahrzeug noch weiter aus dem Toleranzkorridor hinaus bewegen würden, so dass der Fahrer sofort ein eigenes Lenkfehlverhalten erkennen und korrigieren kann. Aber auch für den Fall, dass der Fahrer keine korrigierende Lenkbewegung ausübt, wird das Fahrzeug durch den Eingriff über das Lenkführungsmoment wieder in den Toleranzkorridor zurückgeführt. Gefahrensituationen, die beispielsweise durch Sekundenschlaf auftreten können, werden dadurch entschärft.

Als Lenkgrundmoment wird das Moment definiert, das zur Kompensation des im Lenksystem herrschenden Rückstellmoments erforderlich ist. Damit herrscht im Lenksystem in stationären Zuständen ein Momentengleichgewicht. In konventionellen Lenksystemen muss dieses Lenkgrundmoment vom Fahrer aufgebracht werden, damit das Lenksystem den gewünschten Lenkwinkel ausführt. Beim Erfindungsgegenstand wird dagegen dieses Lenkgrundmoment autonom vom System erzeugt, so dass ein Eingriff des Fahrers nicht zwingend erforderlich ist. Gleichwohl kann es zweckmäßig sein, über Erkennungssysteme sicherzustellen, dass der Fahrer die Lenkhandhabe berührt, um die Aufmerksamkeit des Fahrers zu binden. Bei einem unerlaubten Entfernen der Hand bzw. der Hände von der Lenkhandhabe erfolgt eine Warnung, wobei ggf. auch die Lenkunterstützung des Fahrzeuges abgebrochen werden kann.

Zweckmäßigerweise ist innerhalb des Toleranzkorridors ausschließlich das Lenkgrundmoment als das vom Lenksystem erzeugte Lenkmoment wirksam. Bewegt sich das Fahrzeug demnach innerhalb des Toleranzkorridors, wird kein Lenkführungsmoment erzeugt, vielmehr obliegt es dem Fahrer, durch entsprechend Lenkbewegungen sich innerhalb des Toleranzkorridors zu bewegen. Erst außerhalb des Toleranzkorridors wird das Lenkführungsmoment erzeugt, das den Lenkgrundmoment überlagert wird.

Sowohl das Lenkgrundmoment als auch das Lenkführungsmoment können als Funktion diverser Fahrzeugzustands- und Betriebsgrößen erzeugt werden, beispielsweise als Funktion der Fahrzeuggeschwindigkeit, wobei in diesem Fall insbesondere eine Abhängigkeit vom Quadrat der Fahrzeuggeschwindigkeit in Betracht kommt. Die Fahrzeugzustands- und Betriebsgrößen werden zweckmäßig über eine Inertialsensorik, also eine im Fahrzeug mitgeführte Sensorik ermittelt. Neben der Fahrzeuglängsdynamik kommt gegebenenfalls auch die Berücksichtigung der Fahrzeugquerdynamik in Betracht, insbesondere der Gierrate und der Querbeschleunigung.

Um den Straßenverlauf zu ermitteln, der der Berechnung der Solltrajektorie zugrunde gelegt wird, können verschiedene Verfahren verwendet werden. Möglich ist der Einsatz eines optischen Spurerkennungssystems, insbesondere eines Video-Spurerkennungssystems, bei dem die Fahrspur optisch aufgenommen und in einer Regel- und Steuereinheit ausgewertet wird. Zusätzlich oder alternativ kann auch ein Navigationssystem eingesetzt werden, um über einen Abgleich der absoluten Position des Fahrzeuges mit elektronisch hinterlegtem Kartenmaterial die Relativposition des Fahrzeuges bezogen auf die Fahrspur zu ermitteln.

Die Bestimmung des Toleranzkorridors kann ebenfalls auf verschiedene Art und Weise durchgeführt werden. Hierbei werden insbesondere situationsabhängig Werte für den Korridor als Funktion aktueller Umgebungsgrößen und/oder fahrzeugbezogener Größen wie Fahrgeschwindigkeit oder Gierrate berechnet.

Um dem Fahrer die letztendliche Lenkhoheit zu überlassen, werden zweckmäßig Maximalwerte für das Lenkgrundmoment, das Lenkführungsmoment sowie gegebenenfalls auch für die Summe von Lenkgrundmoment und Lenkführungsmoment vorgegeben. Dies hat zur Folge, dass der Fahrer letztlich den Kurs des Fahrzeuges bestimmt, da der Fahrer ein Handmoment aufbringen kann, das die vom System erzeugten Momente übersteigt.

Das Lenksystem, in dem das Verfahren durchgeführt wird, umfasst eine Lenkhandhabe - in der Regel ein Lenkrad -, eine Lenkwelle, ein Lenkgestänge, ein Lenkgetriebe sowie einen Servomotor. Darüber hinaus sind ein Umgebungserfassungssystem und das Regel- und Steuergerät vorgesehen. Über die Lenkhandhabe und die Lenkwelle wird ein Lenkradwinkel auf das Lenkgetriebe und weiter auf das Lenkgestänge übertragen, wodurch an den gelenkten Rädern die Radlenkwinkel eingestellt werden. Über den Servomotor oder einen zusätzlichen Motor im Lenksystem werden die unterstützenden Momente erzeugt, die das Lenkgrundmoment und das Lenkführungsmoment umfassen. In dem Umgebungserfassungssystem wird der Verlauf der Fahrspur ermittelt, wobei diese Information in dem Regel- und Steuergerät verarbeitet wird, in welchem auch Stellgrößen zur Einstellung des Servomotors erzeugt werden.

Weitere Vorteile und zweckmäßige Ausführungen sind den weiteren Ansprüchen, der Figurenbeschreibung und den Zeichnungen zu entnehmen. Es zeigen:

Fig. 1    eine schematische Darstellung eines Lenksystems in einem Kraftfahrzeug,

Fig. 2    in schematischer Darstellung ein Blockdiagramm zur Durchführung eines Verfahrens zur Einstellung des Lenksystems im Fahrzeug,

Fig. 3    die Position eines Fahrzeuges innerhalb eines zulässigen Korridors in der Fahrspur.

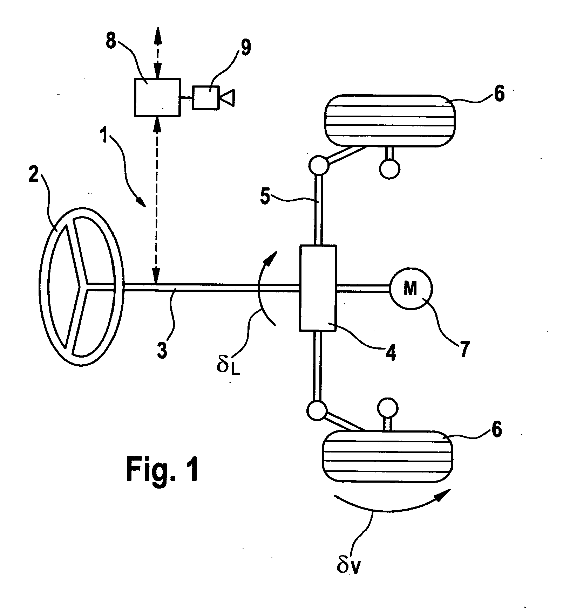

Das in Fig. 1 dargestellte Lenksystem 1 findet in Kraftfahrzeugen Anwendung und umfasst eine als Lenkrad 2 ausgeführte Lenkhandhabe, die mit einer Lenkwelle 3 gekoppelt ist, über die ein vom Fahrer vorgegebener Lenkradwinkel auf ein Lenkgestänge 5 übertragbar ist. Die Verbindung zwischen Lenkwelle 3 und Lenkgestänge 5 erfolgt über ein Lenkgetriebe 4, mit dem der Lenkradwinkel in einen Radlenkwinkel der gelenkten Vorderräder 6 umgesetzt wird. Über einen Motor 7, in der Regel ein elektrischer Servomotor, wobei auch hydraulische Stellglieder in Betracht kommen, wird ein zusätzliches, unterstützendes Moment in das Lenksystem 1 eingespeist.

Vorgesehen ist außerdem ein Regel- und Steuergerät 8, das zweckmäßigerweise Bestandteil des Lenksystems 1 ist und von diesem Signale empfängt bzw. an dieses leitet. Gegebenenfalls ist das Regel- und Steuergerät 8 auch Bestandteil eines zentralen Steuergerätes im Fahrzeug, das beispielsweise über CAN-Leitungen mit dem Lenksystem 1 verbunden ist.

Im Fahrzeug 1 ist außerdem ein ebenfalls dem Lenksystem 1 zugeordnetes Spurerkennungssystem 9 angeordnet, beispielsweise ein Video-Spurerkennungssystem, über das die Fahrspur zu detektieren ist.

Aus den Informationen über die Fahrspur kann eine Solltrajektorie ermittelt werden, die der Fahrzeugführung zugrunde gelegt wird. Über das optische System 9 wird die Fahrspurkrümmung und außerdem die relative Position des Fahrzeuges zur Fahrspur ermittelt, insbesondere der laterale Versatz und die Orientierung zur Fahrspur. Über eine Inertialsensorik können fahrzeugbezogene Zustands- und Betriebsgrößen, insbesondere Fahrzeuglängs- und Fahrzeugquerdynamik-Zustandsgrößen wie z.B. die Fahrzeuggeschwindigkeit und die Gierrate dem Regel- und Steuergerät 8 zugeführt werden. Aus diesen Informationen kann die Abweichung zwischen der ermittelten Solltrajektorie und der Ist-Position des Fahrzeuges festgestellt und einem Regelkreis zugeführt werden, über den im Lenksystem 1 ein Moment erzeugt wird, welches das Fahrzeug auf die Solltrajektorie zwingt. Das künstlich erzeugte Lenkmoment wird über den Motor 7 eingespeist.

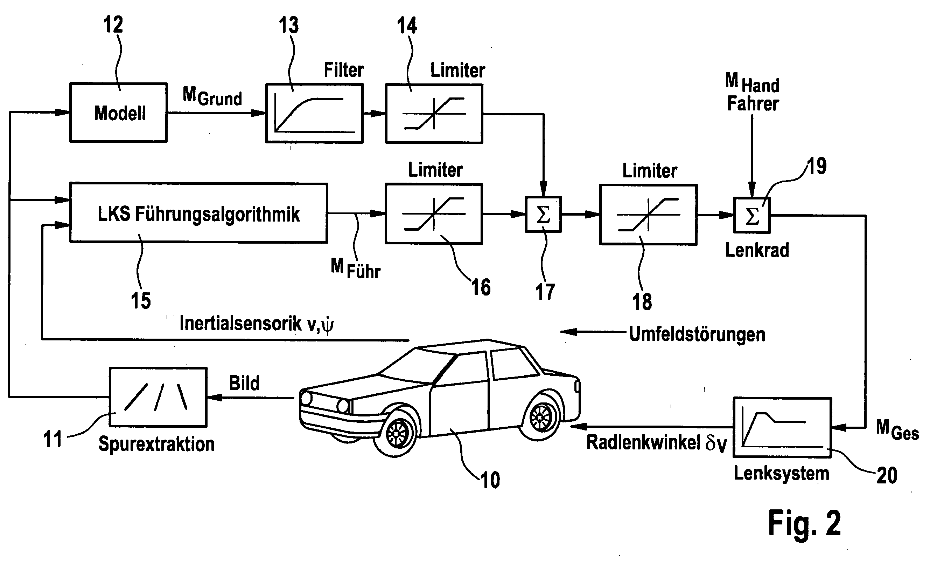

In Fig. 2 ist ein Blockschaltbild mit dem Ablauf des Verfahrens zur Einstellung des Lenksystems eingestellt. Im Kraftfahrzeug 10 wird zunächst mithilfe des Spurerkennungssystems im Verfahrensschritt 11 ein Umgebungsbild erzeugt, aus dem die Fahrspur extrahiert wird. Bei Kenntnis der Fahrspur kann auch die Solltrajektorie ermittelt werden, der das Fahrzeug 10 im optimalen Fall folgen soll. Diese Informationen werden in einem nächsten Verfahrensschritt 12 in einem mathematischen Fahrzeugmodell verarbeitet, aus dem ein Lenkgrundmoment $M_{Grund}$ ermittelt wird, mit dem das Fahrzeug entlang der Solltrajektorie geführt wird. Das Lenkgrundmoment $M_{Grund}$ wird aus dem folgenden Zusammenhang berechnet:

$$M_{Grund} = \frac{l_h \cdot n_r \cdot m \cdot v^2 \cdot \kappa_R \cdot k_{servo}}{l \cdot N} \quad ,$$

wobei $l_h$ den Abstand von Fahrzeugschwerpunkt zur Hinterachse, $n_R$ einen konstruktiv bedingten Nachlauf, m die Fahrzeugmasse, v die Fahrzeuggeschwindigkeit, 1 den Achsabstand, N die Lenkgetriebeübersetzung, $K_R$ die Straßenkrümmung und $k_{servo}$ den Unterstützungsgrad der Servolenkung bezeichnet.

Dieses Grundmoment $M_{Grund}$ wird im Verfahrensschritt 13 einer Filterung unterzogen und anschließend in Verfahrensschritt 14 in einem Limiter betragsmäßig auf einen Maximalwert begrenzt.

Parallel zu dem Zweig, in dem das Lenkgrundmoment $M_{Grund}$ bestimmt wird, kann gegebenenfalls ein Lenkführungsmoment $M_{Führ}$ berechnet werden, das jedoch nur optional erzeugt wird. Dieses Lenkführungsmoment $M_{Führ}$ wird nur für den Fall generiert, dass das Fahrzeug einen Toleranzkorridor verlässt, der der Solltrajektorie zugeordnet ist. Bewegt sich das Fahrzeug dagegen innerhalb des Toleranzkorridors, wird kein Lenkführungsmoment $M_{Führ}$ erzeugt, in diesem Fall bleibt es bei der Erzeugung des Lenkgrundmomentes $M_{Grund}$.

Das Lenkführungsmoment $M_{Führ}$ wird im Verfahrensschritt 15 in einer Führungsalgorithmik erzeugt, die auch aus Lane Keeping Support (LKS) bezeichnet wird. Der Führungsalgorithmik 15 wird ebenso wie dem Fahrzeugmodell 12 die Information aus dem vorangegangenen Verfahrensschritt 11, also die Solltrajektorie sowie die Abweichung der tatsächlichen Position des Fahrzeuges gegenüber der Solltrajektorie zugeführt. Außerdem fließen in die Führungsalgorithmik 15 auch Funktionen aus einer Inertialsensorik ein, die im Fahrzeug 10 mitgeführt wird und über die Fahrzeugzustands- und Betriebsgrößen ermittelt werden, insbesondere die Fahrzeuggeschwindigkeit v und die Gierrate $\dot{\psi}$. Der Führungsalgorithmik 15 können außerdem Umfeldstörungen als Eingangsgrößen zugeführt werden, die als Störung auf das Fahrzeug einwirken, beispielsweise Windeinflüsse.

Wird in der Führungsalgorithmik 15 festgestellt, dass sich das Fahrzeug außerhalb des zulässigen Toleranzkorridors befindet, wird das zusätzliche Lenkführungsmoment $M_{Führ}$ generiert, das im nachfolgenden Verfahrensschritt 16 in einem Limiter betragsmäßig auf einen zulässigen Maximalwert begrenzt wird. Anschließend werden im Verfahrensschritt 17 das Lenkgrundmoment $M_{Grund}$ und das Lenkführungsmoment $M_{Führ}$ addiert, wobei das daraus entstehende Gesamtmoment im nachfolgenden Schritt 18 in einem Limiter ebenfalls betragsmäßig auf einen zulässigen Maximalwert begrenzt werden kann.

Im nachfolgenden Verfahrensschritt 19 erfolgt eine weitere additive Überlagerung, und zwar mit dem vom Fahrer erzeugten Handmoment $M_{Hand}$, welches der Fahrer über das Lenkrad vorgibt. Das entstehende Gesamtmoment $M_{Ges}$ wird danach im nächsten Verfahrensschritt 20 im Lenksystem zum resultierenden Radlenkwinkel $\delta_V$ umgesetzt, der an den lenkbaren Vorderrädern des Fahrzeuges 10 eingestellt wird.

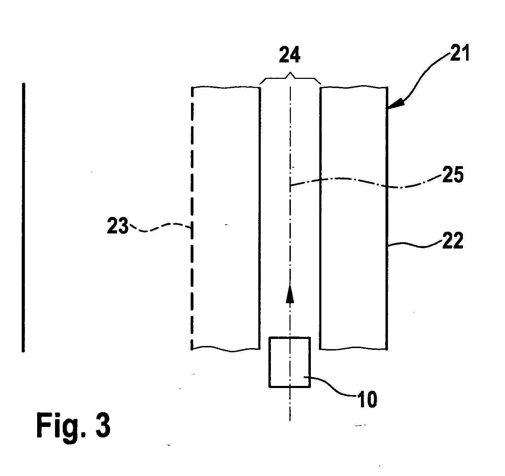

In Fig. 3 ist in Draufsicht schematisch eine Fahrspur 21 mit einem Fahrzeug 10 dargestellt. Die Fahrspur 21 wird in Fahrtrichtung des Fahrzeuges 10 von seitlichen Fahrspurmarkierungen 22 und 23 begrenzt, wobei innerhalb dieser seitlichen Begrenzungen ein zulässiger Korridor 24 ausgewiesen wird, innerhalb dem sich das Fahrzeug 10 bewegen darf, ohne Korrektur über ein zusätzliches Lenkführungsmoment $M_{Führ}$.

Eingetragen ist in Fig. 3 außerdem eine Solltrajektorie 25, die die optimale Fahrspur für das Fahrzeug 10 darstellt und der das Fahrzeug durch eine entsprechende Einstellung des Lenkgrundmomentes $M_{Grund}$ automatisch folgt. Diese Solltrajektorie 25 kann der Fahrspur 21 entsprechend mit optimalem seitlichem Abstand zu den Fahrspurmarkierungen 22 und 23 verlaufen oder auch versetzt dazu liegen. Der Korridor 24 ist um die Solltrajektorie 25 mit seitlichem Abstand nach links und rechts gelegt, wobei der seitliche Abstand den Toleranzbereich markiert, innerhalb dem sich das Fahrzeug 10 bewegen darf, ohne grundsätzlich die Solltrajektorie 25 zu verlassen. Erst bei einer Bewegung außerhalb des Korridors 24 wird als Lenkkorrektur ein Lenkführungsmoment $M_{Führ}$ erzeugt, welches das Fahrzeug zurück in den Korridor 24 beaufschlagt.

**Patentansprüche**

1. Verfahren zur Einstellung eines Lenksystem in einem Fahrzeug, bei dem eine an die Umgebungssituation angepasste Solltrajektorie (25) erzeugt und ein Lenkmoment in der Weise im Lenksystem (1) eingestellt wird, dass das Fahrzeug (10) der Solltrajektorie (25) folgt,
**dadurch gekennzeichnet,**

- **dass** der Solltrajektorie (25) ein Toleranzkorridor (24) zugeordnet und ein Lenkgrundmoment ($M_{Grund}$) zum Führen des Fahrzeugs (10) innerhalb des Toleranzkorridors (24) erzeugt wird,
- **dass** für den Fall, dass das Fahrzeug (10) den Toleranzkorridor (24) verlässt, dem Lenkgrundmoment ($M_{Grund}$) ein Lenkführungsmoment ($M_{Führ}$) überlagert wird, welches das Fahrzeug (10) in Richtung des Toleranzkorridors (24) beaufschlagt.

2. Verfahren nach Anspruch 1,
   **dadurch gekennzeichnet, dass** das Lenkgrundmoment ($M_{Grund}$) das zur Kompensation des im Lenksystem (1) herrschenden Rückstellmoments erforderlich Moment ist.

3. Verfahren nach Anspruch 1 oder 2,
   **dadurch gekennzeichnet, dass** innerhalb des Toleranzkorridors (24) ausschließlich das Lenkgrundmoment ($M_{Grund}$) als vom Lenksystem (1) erzeugtes Lenkmoment wirksam ist.

4. Verfahren nach einem der Ansprüche 1 bis 3,
   **dadurch gekennzeichnet, dass** das Lenkgrundmoment ($M_{Grund}$) und/oder das Lenkführungsmoment ($M_{Führ}$) als Funktion der Fahrzeuglängsdynamik und/oder der Fahrzeugquerdynamik, insbesondere der Fahrzeuggeschwindigkeit (v), insbesondere als Funktion des Quadrats der Fahrzeuggeschwindigkeit (v) berechnet wird.

5. Verfahren nach Anspruch 4,
   **dadurch gekennzeichnet, dass** das Lenkgrundmoment ($M_{Grund}$) gemäß folgendem Zusammenhang zu berechnen ist:

$$M_{Grund} = \frac{l_h \cdot n_r \cdot m \cdot v^2 \cdot \kappa_R \cdot k_{servo}}{l \cdot N} \quad ,$$

wobei

$M_{Grund}$ das Lenkgrundmoment,
$1_h$ den Abstand von Fahrzeugschwerpunkt zur Hinterachse,
$n_R$ einen konstruktiv bedingten Nachlauf,
m die Fahrzeugmasse,
v die Fahrzeuggeschwindigkeit,
l den Achsabstand,
N die Lenkgetriebeübersetzung,

$K_R$ die Straßenkrümmung,
$k_{servo}$ den Unterstützungsgrad der Servolenkung

bezeichnet.

6. Verfahren nach einem der Ansprüche 1 bis 5,
   **dadurch gekennzeichnet, dass** die Straßenkrümmung ($K_R$) gemessen wird und das Lenkgrundmoment ($M_{Grund}$) auf der Grundlage der Straßenkrümmung ($K_R$) in einem mathematischen Fahrzeugmodell ermittelt wird.

7. Verfahren nach einem der Ansprüche 1 bis 6,
   **dadurch gekennzeichnet, dass** der Straßenverlauf über ein optisches Spurerkennungssystem (9) ermittelt wird, insbesondere einem Videospurerkennungssystem.

8. Verfahren nach einem der Ansprüche 1 bis 7,
   **dadurch gekennzeichnet, dass** der Straßenverlauf mithilfe eines Navigationssystem ermittelt wird.

9. Verfahren nach einem der Ansprüche 1 bis 8,
   **dadurch gekennzeichnet, dass** der Toleranzkorridor (24) situationsabhängig als Funktion von fahrzeugbezogehen Größen und/oder Umgebungsgrößen ermittelt wird.

10. Verfahren nach einem der Ansprüche 1 bis 9,
    **dadurch gekennzeichnet, dass** das Lenkgrundmoment ($M_{Grund}$) betragsmäßig auf einen Maximalwert begrenzt wird.

11. Verfahren nach einem der Ansprüche 1 bis 10,
    **dadurch gekennzeichnet, dass** das Lenkführungsmoment ($M_{Führ}$) betragsmäßig auf einen Maximalwert begrenzt wird.

12. Verfahren nach einem der Ansprüche 1 bis 11,
    **dadurch gekennzeichnet, dass** die Summe von Lenkgrundmoment ($M_{Grund}$) und Lenkführungsmoment ($M_{Führ}$) betragsmäßig auf einen Maximalwert begrenzt wird.

13. Regel- und Steuergerät zur Durchführung des Verfahrens nach einem der Ansprüche 1 bis 12.

14. Lenksystem in einem Fahrzeug (10) zur Durchführung des Verfahrens nach einem der Ansprüche 1 bis 12, mit einer Lenkhandhabe (2), einer Lenkwelle (3), einem Lenkgestänge (5), einem Lenkgetriebe (4), einem Motor (7), einem Umgebungserfassungssystem und einem Regel- und Steuergerät (8).

## Claims

1. Method for adjusting a steering system in a vehicle, in which a setpoint trajectory (25) which is adapted to the surrounding situation is generated, and a steering torque is adjusted in the steering system (1) in such a way that the vehicle (10) follows the setpoint trajectory (25), **characterized**

   - **in that** a tolerance corridor (24) is assigned to the setpoint trajectory (25), and a basic steering torque ($M_{basic}$) for guiding the vehicle (10) is generated within the tolerance corridor (24),
   - **in that** if the vehicle (10) leaves the tolerance corridor (24), a steering guidance torque ($M_{guide}$), which acts on the vehicle (10) in the direction of the tolerance corridor (24), is superimposed on the basic steering torque ($M_{basic}$).

2. Method according to Claim 1, **characterized in that** the basic steering torque ($M_{basic}$) is the torque which is necessary to compensate the resetting torque which prevails in the steering system (1).

3. Method according to Claim 1 or 2, **characterized in that** exclusively the basic steering torque ($M_{basic}$) is effective as the steering torque which is generated by the steering system (1) within the tolerance corridor (24).

4. Method according to one of Claims 1 to 3, **characterized in that** the basic steering torque ($M_{basic}$) and/or the steering guidance torque ($M_{guide}$) are/is calculated as a function of the vehicle longitudinal dynamics and/or the vehicle transverse dynamics, in particular the vehicle speed (v), in particular as a function of the square of the vehicle speed (v).

5. Method according to Claim 4, **characterized in that** the basic steering torque ($M_{basic}$) can be calculated according to the following relationship:

$$M_{basic} = \frac{l_h \cdot n_r \cdot m \cdot v^2 \cdot \kappa_R \cdot k_{servo}}{l \cdot N}$$

where

$M_{basic}$ denotes the basic steering torque,
$l_h$ denotes the distance between the centre of gravity of the vehicle and the rear axle,
$n_R$ is a structurally conditioned caster,
m denotes the mass of the vehicle,

v denotes the vehicle speed,
l denotes the wheel base,
N denotes the steering gear transmission ratio,
$\kappa_R$ denotes the curvature of the road, and
servo denotes the degree of support provided by the power steering system.

6. Method according to one of Claims 1 to 5, **characterized in that** the curvature of the road ($\kappa_R$) is measured and the basic steering torque ($M_{basic}$) is determined on the basis of the curvature of the road ($\kappa_R$) in a mathematical vehicle model.

7. Method according to one of Claims 1 to 6, **characterized in that** the profile of the road is determined by means of an optical lane-detection system (9), in particular a video lane-detection system.

8. Method according to one of Claims 1 to 7, **characterized in that** the profile of the road is determined using a navigation system.

9. Method according to one of Claims 1 to 8, **characterized in that** the tolerance corridor (24) is determined in a situation-dependent fashion as a function of vehicle-related variables and/or ambient variables.

10. Method according to one of Claims 1 to 9, **characterized in that** the basic steering torque ($M_{basic}$) is limited in absolute terms to a maximum value.

11. Method according to one of Claims 1 to 10, **characterized in that** the steering guidance torque ($M_{guide}$) is limited in absolute terms to a maximum value.

12. Method according to one of Claims 1 to 11, **characterized in that** the sum of the basic steering torque ($M_{basic}$) and the steering guidance torque ($M_{guide}$) is limited in absolute terms to a maximum value.

13. Closed-loop and open-loop control unit for carrying out the method according to one of Claims 1 to 12.

14. Steering system in a vehicle (10) for carrying out the method according to one of Claims 1 to 12, having a steering handle (2), a steering shaft (3), a steering linkage (5), a steering gear (4), a motor (7), a surroundings sensor system and a closed-loop and open-loop control unit (8).

## Revendications

1. Procédé de réglage d'un système de direction d'un véhicule, dans lequel une trajectoire de consigne (25) adaptée à la situation de l'environnement est formée et un couple de direction est établi dans le système de direction (1) de telle sorte que le véhicule (10) suive la trajectoire de consigne (25), **caractérisé en ce que** un corridor de tolérance (24) est associé à la trajectoire de consigne (25) et un couple de direction de base ($M_{Grund}$) est formé pour guider le véhicule (10) à l'intérieur du corridor de tolérance (24) et **en ce qu'**au cas où le véhicule (10) quitte le corridor de tolérance (24), un couple de direction ($M_{Führ}$) qui ramène le véhicule (10) en direction du corridor de tolérance (24) est superposé au couple de direction de base ($M_{Grund}$).

2. Procédé selon la revendication 1, **caractérisé en ce que** le couple de direction de base ($M_{Grund}$) est le couple nécessaire pour compenser le couple de rappel qui règne dans le système de direction (1).

3. Procédé selon les revendications 1 ou 2, **caractérisé en ce qu'**à l'intérieur du corridor de tolérance (24), seul le couple de direction de base ($M_{Grund}$) est actif comme couple de direction délivré par le système de direction (1).

4. Procédé selon l'une des revendications 1 à 3, **caractérisé en ce que** le couple de direction de base ($M_{Grund}$) et/ou le couple de direction ($M_{Führ}$) est calculé en fonction de la dynamique longitudinale du véhicule et/ou de la dynamique transversale du véhicule, en particulier de la vitesse (v) du véhicule et en particulier en fonction du carré de la vitesse (v) du véhicule.

5. Procédé selon la revendication 4, **caractérisé en ce que** le couple de direction de base ($M_{Grund}$) est calculé sur base de l'équation suivants :

$$M_{Grund} = \frac{l_h \cdot n_r \cdot m \cdot v^2 \cdot \mathbf{K}_R \cdot k_{servo}}{l \cdot N}$$

dans laquelle

$M_{Grund}$ est le couple de direction de base,
$l_h$ la distance entre le centre de masse du véhicule et l'essieu arrière
$n_g$ une traînée d'origine structurelle
m la masse du véhicule
v la vitesse du véhicule
l l'écartement entre les essieux
N le taux de conversion de la transmission de direction
$K_r$ la courbure du virage
$K_{servo}$ le degré d'assistance de la servo-direction

6. Procédé selon l'une des revendications 1 à 5, **ca-**

**ractérisé en ce que** la courbure ($K_R$) du virage est mesurée et **en ce que** le couple de direction de base ($M_{Grund}$) est déterminé dans un modèle mathématique du véhicule sur base de la courbure ($K_R$) du virage.

7. Procédé selon l'une des revendications 1 à 6, **caractérisé en ce que** l'évolution de la chaussée est déterminée par un système optique (9) de reconnaissance des bandes de circulation et en particulier un système vidéo de reconnaissance des bandes de circulation.

8. Procédé selon l'une des revendications 1 à 7, **caractérisé en ce que** l'évolution de la chaussée est déterminée à l'aide d'un système de navigation.

9. Procédé selon l'une des revendications 1 à 8, **caractérisé en ce que** le corridor de tolérance (24) est déterminé en fonction de la situation et de grandeurs associées au véhicule et/ou de grandeurs associées à l'environnement.

10. Procédé selon l'une des revendications 1 à 9, **caractérisé en ce que** la valeur du couple de direction de base ($M_{Grund}$) est limitée à une valeur maximale.

11. Procédé selon l'une des revendications 1 à 10, **caractérisé en ce que** la valeur du couple de direction ($M_{Führ}$) est limitée à une valeur maximale.

12. Procédé selon l'une des revendications 1 à 11, **caractérisé en ce que** la valeur de la somme du couple de direction de base ($M_{Grund}$) et du couple de direction ($M_{Führ}$) est limitée à une valeur maximale.

13. Appareil de régulation et de commande en vue de l'exécution du procédé selon l'une des revendications 1 à 12.

14. Système de direction d'un véhicule (10) destiné à exécuter le procédé selon l'une des revendications 1 à 12, et doté d'un volant (2), d'un arbre de direction (3), d'une tringlerie de direction (5), d'une transmission de direction (4), d'un moteur (7), d'un système de saisie de l'environnement et d'un appareil de régulation et de commande (8).

**Fig. 1**

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10137292 A1
- DE 102004037298 A1
- WO 2005047045 A1